# EUROPÄISCHE PATENTSCHRIFT

(11) **EP 2 837 466 B1**
(45) Veröffentlichungstag und Bekanntmachung des Hinweises auf die Patenterteilung: **01.08.2018**
(21) Anmeldenummer: 13180673.9
(22) Anmeldetag: 16.08.2013
(51) Int. Cl.: B23B 31/28, B23Q 1/26, B23Q 3/06, B23Q 1/00

(54) **Spanneinheit, insbesondere zur Verwendung in einem Bearbeitungszentrum bzw. einem Dreh- bzw. Fräszentrum**
Clamping unit, in particular for use in a machining centre or a turning or milling center
Unité de serrage, en particulier pour l'utilisation dans un centre d'usinage ou un centre de tournage ou fraisage

(43) Veröffentlichungstag der Anmeldung: 18.02.2015
(73) Patentinhaber: SMW-AUTOBLOK Spannsysteme GmbH, 88074 Meckenbeuren (DE)
(72) Erfinder: Deininger, Harald, 88048 Friedrichshafen (DE); Maurer, Eckhard, 88049 Oberteuringen (DE)
(74) Vertreter: Zech, Stefan Markus

(56) Entgegenhaltungen:
- EP-A1- 1 473 110
- WO-A1-2010/037360
- DE-A1- 2 117 550
- DE-A1- 3 546 252
- DE-A1- 10 026 829
- DE-T2- 60 002 417
- US-A- 3 998 108
- US-A- 4 700 936

## Beschreibung

Die Erfindung betrifft eine Spanneinheit, insbesondere zur Verwendung in einem Bearbeitungszentrum bzw. einem Dreh- bzw. Fräszentrum, wobei die Spanneinheit ein Außengehäuse von vorzugsweise zylindrischer Grundform ein im Außengehäuse aufgenommenes Innengehäuse sowie einen im Innengehäuse in einer im Betriebszustand vertikalen Stellrichtung A verstellbar gehaltenen Innenzylinder, der dazu ausgebildet ist, eine Druck- oder Zugkraft zu Spannzwecken zu übertragen, umfasst nach den Merkmalen des Anspruchs 1.

Aus dem Stand der Technik sind bereits Spanneinheiten zur Verwendung in einem Bearbeitungszentrum bzw. einem Dreh- bzw. Fräszentrum bekannt, die ein zu bearbeitendes Werkstück relativ rasch und zuverlässig einzuspannen in der Lage sind.

Aus der US 3,998,198 ist darüber hinaus eine Spanneinheit nach dem Oberbegriff des Anspruchs 1 mit einem in einer vertikalen Stellrichtung A verstellbar gehaltenen Innenzylinder bekannt zur Betätigung von Ventilen. Der dort gezeigte verstellbare Innenzylinder umfasst auch einen Federkraftspeicher. Gegenüber dem Stand der Technik besteht die Aufgabe darin, eine Spanneinheit bereitzustellen, die hinsichtlich der Aufbringung und Sicherstellung von Spannkräften noch verbessert ist.

Diese Aufgabe wird mit einer Spanneinheit, insbesondere zur Verwendung in einem Bearbeitungszentrum bzw. einem Dreh- bzw. Fräszentrum gelöst, wobei die Spanneinheit ein Außengehäuse von vorzugsweise zylindrischer Grundform, ein im Außengehäuse aufgenommenes Innengehäuse sowie einen im Innengehäuse in einer im Betriebszustand vertikalen Stellrichtung A verstellbar gehaltenen Innenzylinder, der dazu ausgebildet ist, eine Druck- oder Zugkraft zu Spannzwecken zu übertragen, umfasst, wobei sich das Innengehäuse über Federn gegen das Außengehäuse abstützt und in Stellrichtung A gegenüber dem Außengehäuse verschieblich gelagert ist und so einen Federkraftspeicher ausbildet, und wobei innerhalb der Spanneinheit integriert, vorzugsweise vom Außengehäuse umschlossen ein Elektromotor innerhalb des Innengehäuses aufgenommen angeordnet ist, um über zwischengeordnete Getriebemittel den Innenzylinder mit einer Kraft in Stellrichtung A zu beaufschlagen.

Nach einer Kernüberlegung der vorliegenden Erfindung wird insofern einerseits ein Federkraftspeicher dadurch realisiert, dass sich ein verschiebliches Innengehäuse über Federn gegen das Außengehäuse der Spanneinheit abstützt und dabei in Stellrichtung A gegenüber dem Außengehäuse verschieblich gelagert ist und weiterhin ein Elektromotor innerhalb der Spanneinheit, konkret innerhalb des Innengehäuses integriert angeordnet ist, um über zwischengeordnete Getriebemittel den Innenzylinder mit einer Kraft in Stellrichtung A zu beaufschlagen. Durch diese Kombination wird eine universell einsetzbare, zuverlässig und einfach zu bedienende Spanneinheit geschaffen, die beispielsweise in einem Bearbeitungszentrum bzw. einem Dreh- bzw. Fräszentrum - auch rotierend - eingesetzt werden kann. Eine Stromversorgung kann im Falle einer rotierend eingesetzten Spanneinheit über Schleifkontakte realisiert werden. Alternativ ist es möglich, die Spanneinheit in nicht-rotierendem Betriebszustand an eine Stromversorgung anzuschließen, da Spannvorgänge ohnehin nur in einem nichtrotierenden Betriebszustand durchgeführt werden.

In einer bevorzugten Ausgestaltung umfassen die Getriebemittel einen Hülsengewindetrieb oder einen Planetenrollengewindetrieb, um eine Drehbewegung des Elektromotors in eine axiale Beaufschlagung des Innenzylinders zu übertragen. In einer weiteren möglichen Ausgestaltung umfassen die Getriebemittel ein Schneckengetriebe mit einer motorseits vorgesehenen Schnecke und einem abtriebsseitig vorgesehenen Schneckenrad.

Besonders bevorzugt wird eine Ausgestaltung, in der das Schneckenrad drehmomentschlüssig mit einem mit Innengewinde versehenen ersten Teilelements des Hülsengewindetriebs oder des Planetenrollengewindetriebs verbunden ist, insbesondere einstückig mit diesem ausgebildet ist.

Über ein Schneckengetriebe lässt sich bekanntermaßen eine hohe Übersetzung bewirken. Wenn das Schneckengetriebe gleichzeitig mit dem Hülsengewindetrieb oder dem Planetenrollengewindetrieb verzahnt ist, also das Schneckenrad an einer äußeren Umfangsfläche des ersten Teilelements des Hülsengewindetriebs oder des Planetenrollengewindetriebs ausgebildet ist, lässt sich mit wenigen Bauteilen eine Drehbewegung eines Elektromotors in eine Axialbewegung des Innenzylinders umwandeln.

In einer konkreten, möglichen Ausgestaltung umfasst das Schneckenrad eine umlaufende obere Lagerfläche sowie eine umlaufende untere Lagerfläche, über die es sich, vorzugsweise über Kugeln, gegenüber dem Innengehäuse in radialer und/oder axialer Richtung abstützt.

Damit die Spanneinheit relativ flachbauend ausgebildet werden kann, wird es bevorzugt, wenn der Elektromotor eine Abtriebswelle aufweist, die orthogonal zur Stellrichtung A des Innenzylinders ausgerichtet ist.

Aus ähnlichen Überlegungen wird es, wenn ein Schneckengetriebe vorgesehen wird, bevorzugt, auch die Schnecke in einer zur Stellrichtung A orthogonal verlaufenden Achse S auszurichten.

Schließlich kann es im Hinblick auf eine kompakte Ausgestaltung der Spanneinheit vorteilhaft sein, wenn ein Schneckengetriebe vorgesehen wird, die Schnecke nicht unmittelbar axial mit der Abtriebswelle des Elektromotors zu verbinden, sondern die Schnecke orthogonal zur Abtriebswelle des Elektromotors anzuordnen. Eine drehmomentschlüssige Übertragung der Drehbewegung der Abtriebswelle auf die Schnecke kann beispielsweise über ein dazwischen angeordnetes Zahnradgetriebe erfolgen.

In einer bevorzugten Ausgestaltung der vorliegenden Erfindung stützt sich das Innengehäuse über eine Mehrzahl von Federn unterschiedlicher Bauart, insbesondere über ein oder mehrere Spiralfedern und über ein oder mehrere Gasdruckfedern am Außengehäuse ab. In dieser Bauart, die auch unabhängig von der Integration eines Elektromotors in die Spanneinheit als Erfindung beansprucht wird, werden die Federcharakteristika der genannten Federn unterschiedlicher Bauart in synergistischer Weise miteinander kombiniert. Während eine Spiralfeder bei geringer Verstellbewegung nur eine geringe Gegenkraft, hingegen bei hohen Verstellwegen eine hohe Gegenkraft bereitstellt, wird von einer Gasdruckfeder bereits bei nur geringen Verstellwegen eine relativ hohe Gegenkraft erzeugt. Überlagert man nun die Federcharakteristika beider Federn unterschiedlicher Bauart, indem man sie von ihrer Wirkungsweise her, also funktionell betrachtet parallel zueinander, etwa nebeneinanderliegend, einsetzt, so ergibt sich eine Gesamtfedercharakteristik, die auch schon bei geringen Verstellwegen eine relativ hohe Gegenkraft bereitstellt, diese Gegenkraft aber bei höheren Verstellwegen sogar noch - aufgrund der dann einsetzenden Wirkung der Spiralfedern - ansteigt.

In einer weiteren möglichen, bevorzugten Ausgestaltung weist der Innenzylinder zumindest einen Abschnitt, vorzugsweise einen distalen Abschnitt mit einer von der Rotationsform abweichenden Querschnittsform, insbesondere mit elliptischer Querschnittsform auf, um den Innenzylinder relativ zum Außengehäuse drehfest festzulegen. Konkret kann der Innenzylinder mit elliptischer Querschnittsform beispielsweise durch eine Öffnung im Außengehäuse mit entsprechend elliptischer Querschnittsform geführt sein, so dass hierdurch die gewünschte drehfeste Festlegung bewirkt wird.

In einer fakultativ möglichen Ausgestaltung ist eine Arretiereinrichtung vorgesehen, um die Getriebemittel bedarfsweise, insbesondere in Ruhestellung des Elektromotors zu arretieren.

Zwar kann bei entsprechender Ausgestaltung des Schneckengetriebes bereits eine Arretierung durch das Schneckengetriebe selbst gegeben sein, aus Sicherheitsgründen oder bei einer keine Arretierung bewirkenden Ausgestaltung des Schneckengetriebes, bewirkt die Arretierung insbesondere in Ruhestellung des Elektromotors aber mit besonders hoher Zuverlässigkeit, dass eine erzeugte und im Federkraftspeicher aufgenommene Spannkraft nicht durch unerwünschte Rückstellung der Getriebemittel verloren geht.

In einer konkreten Ausgestaltung kann die Arretiereinrichtung einen axial verlagerbaren Stift umfassen, der über eine Betätigungseinrichtung mit einer Arretierausnehmung im zugeordneten Getriebemittel, insbesondere in einem Wellenfortsatz der Schnecke in Eingriff bzw. außer Eingriff bringbar ist. Ein derartiger axial verlagerbarer Stift bewirkt eine sichere Arretierung, da er lediglich in Arretierposition gehalten, nicht aber dauerhaft mit einer Haltekraft beaufschlagt werden muss. Die Betätigungseinrichtung zur Verlagerung des axial verlagerbaren Stifts kann als elektromagnetischer Aktuator ausgebildet sein, der den Stift von einer ersten Position in eine zweite Position bzw. von einer zweiten Position in eine erste Position verlagern kann. Ggf. kann der axial verlagerbare Stift auch durch eine Feder in Richtung auf die Arretierposition beaufschlagt sein derart, dass lediglich bei Betätigung des Elektromotors bzw. der Getriebemittel die Betätigungseinrichtung angesteuert wird, um den axial verlagerbaren Stift entgegen der Federbeaufschlagung aus der Arretierposition in eine Freigabeposition zu überführen. Sobald die Verstellbewegung des Spannzylinders über den Elektromotor und die Getriebemittel abgeschlossen ist, kann die Betätigungseinrichtung den Stift wieder unter Wirkung der genannten Feder in die Arretierposition zurückgleiten lassen.

In einer möglichen, bevorzugten Ausgestaltung sind weiterhin Arretiersensormittel vorgesehen, um zu überprüfen, ob die Arretiereinrichtung in Arretierstellung ist. Konkret kann, wenn die Arretiereinrichtung einen axial verlagerbaren Stift umfasst, durch die Arretiersensormittel überprüft werden, in welcher Position sich der axial verlagerbare Stift befindet.

In einer weiteren fakultativen Ausgestaltung sind Sensoreinrichtungen vorgesehen, die ausgebildet und bestimmt sind, die Verstellposition des Innengehäuses innerhalb des Außengehäuses und dadurch indirekt die im Federkraftspeicher vorgehaltene Gegenkraft anzuzeigen oder zu erfassen.

Weiterhin können noch Sensoreinrichtungen vorgesehen sein, die ausgebildet und bestimmt sind, die Drehbewegung des Elektromotors, der Antriebswelle und/oder der Getriebemittel, insbesondere die jeweilige Umdrehungszahl, zu erfassen.

Schließlich ist in einer bevorzugten Ausgestaltung das Innengehäuse derart ausgebildet, dass es ein Gehäusegrundelement sowie einen Gehäusedeckel umfasst, die über lösbare Verbindungselemente aneinander befestigt sind. In dieser Ausgestaltung wird es besonders einfach, die Spanneinheit, insbesondere das Innengehäuse mit den darin aufgenommenen bzw. gelagerten Komponenten, wie Schneckengetriebe, Hülsengewindetrieb mit darin aufgenommenem Innenzylinder, Elektromotor mit Zahnradgetriebe und Federn zu montieren.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Figur 1: eine Ausführungsform der erfindungsgemäßen Spanneinheit in perspektivischer Ansicht.
- Figur 2: die Spanneinheit nach Figur 1 in Draufsicht.
- Figur 3: eine Schnittansicht durch die Spanneinheit nach Figur 2 entlang der Linie III-III in Figur 2.
- Figur 3a: eine Detailansicht aus Figur 3.
- Figur 4: eine Schnittansicht entlang der Linie IV-IV in Figur 3.
- Figur 5: ein Diagramm zur Veranschaulichung der nach einem weiteren Aspekt der vorliegenden Erfindung parallel zueinander wirksamer Federn unterschiedlicher Bauart, die sich hinsichtlich ihrer Federcharakteristik überlagern.

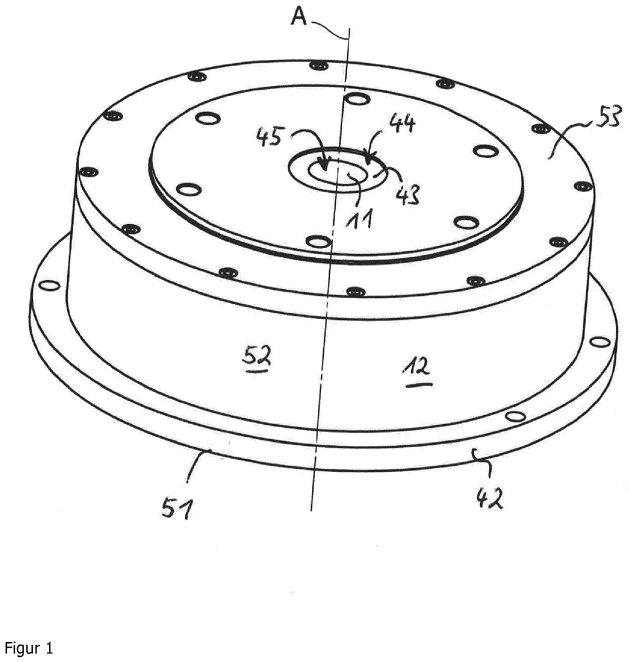

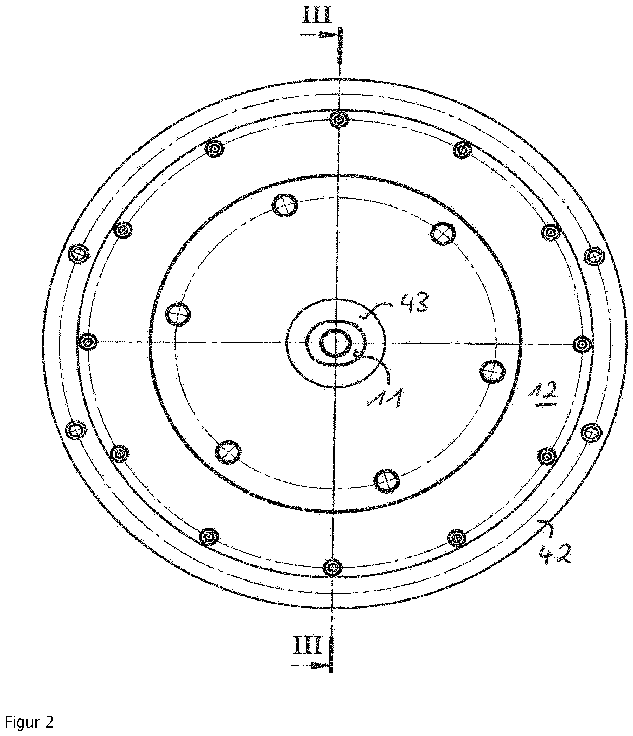

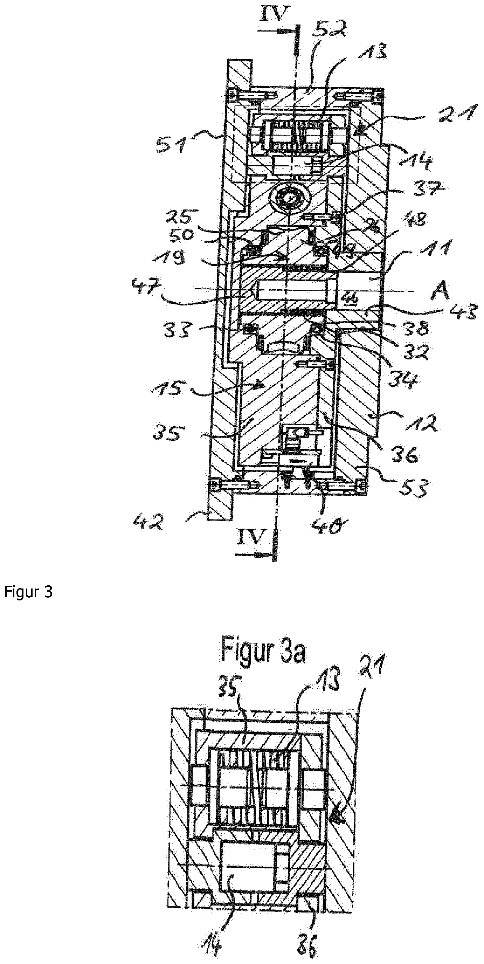

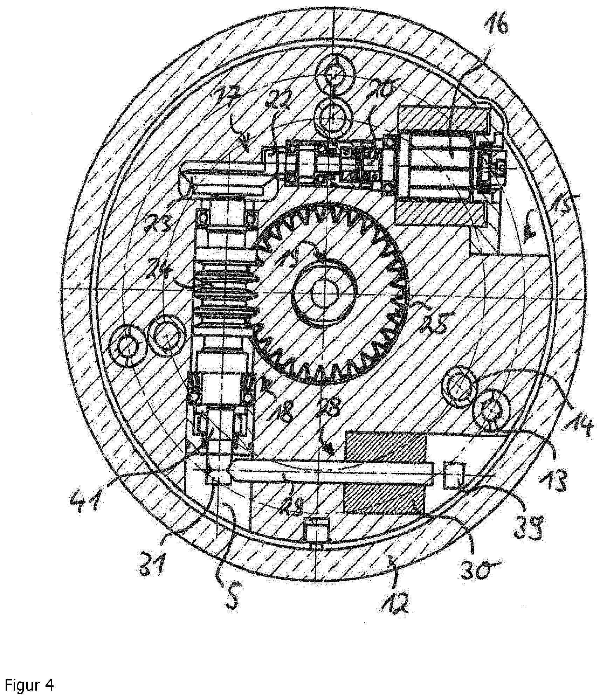

In Figur 1 ist eine perspektivische Ansicht einer Ausführungsform einer erfindungsgemäßen Spanneinheit und in Figur 2 eine Draufsicht auf diese Ausführungsform veranschaulicht. Die Spanneinheit umfasst zunächst ein aus einem unteren Außengehäuseelement 51, einem mittleren Außengehäuseelement 52 sowie einem oberen Außengehäuseelement 53 zusammengesetztes Außengehäuse 12. Das untere Außengehäuseelement 51 bildet an seiner Unterseite einen Befestigungsflansch 42 aus. Am oberen Außengehäuse 53 ragt ein oberer Halsabschnitt 43 eines Innengehäuses 15 (vgl. hierzu Figuren 3 und 4) in eine Öffnung 44 des oberen Außengehäuseelements 53 bzw. des Außengehäuses 12. Der Halsabschnitt 43 des Innengehäuses 15 definiert ebenfalls eine Öffnung 45 mit einer im Wesentlichen elliptischen Querschnittsform. In dieser Öffnung 45 ist ein Innenzylinder 11 geführt, der in seinem distalen oberen Abschnitt eine an die elliptische Form der Öffnung 45 angepasste, ebenfalls elliptische Querschnittsform aufweist.

In Figur 3 ist eine Schnittansicht entlang der Linie III-III in Figur 2 dargestellt. Aus dieser Schnittansicht wird ersichtlich, wie das Innengehäuse 15 im Außengehäuse 12 aufgenommen ist. Konkret stützt es sich über Federn 13, 14 unterschiedlicher Bauart, nämlich konkret über eine Mehrzahl von Spiralfedern 13 sowie eine Mehrzahl von Gasdruckfedern 14 (vgl. hierzu auch Figur 4) am Außengehäuse 12 ab derart, dass das Innengehäuse in Verstellrichtung A, allerdings jeweils gegen die durch die Federn 13, 14 bereitgestellte Gegenkraft, verschieblich gelagert ist. Durch die verschiebliche Lagerung des Innengehäuses 15 im Außengehäuse 12 unter Überwindung der von den Federn 13, 14 bereitgestellten Gegenkraft wird ein Federkraftspeicher 21 definiert.

Um das Innengehäuse 15 im Außengehäuse 12 entlang der Verstellrichtung A zu führen, können Führungen bereitgestellt sein, wobei in der vorliegenden Ausführungsform die Führung durch den bereits erwähnten Halsabschnitt 43 innerhalb der Öffnung 44 des Außengehäuses 12 definiert ist.

Innerhalb des Innengehäuses 15 ist der bereits erwähnte Innenzylinder 11, der in Stellrichtung A verstellbar ausgebildet ist, gelagert. Der Innenzylinder 11 ist bei der vorliegenden Ausführungsform mehrteilig ausgebildet und weist einen ersten oberen Abschnitt 46 sowie einen zweiten unteren Abschnitt 47 auf.

Am ersten oberen Abschnitt 46 ist der Innenzylinder 11 mit dem bereits erwähnten elliptischen Querschnitt ausgestaltet. Der zweite untere Abschnitt 47 des Spannzylinders weist hingegen einen kreisrunden Querschnitt und an seinem Außenumfang zumindest abschnittsweise ein Außengewinde 48 auf. Erster Abschnitt 46 und zweiter Abschnitt 47 können lösbar, insbesondere über eine Schraubverbindung oder auf andere geeignete Weise miteinander verbunden werden. Alternativ ist es auch möglich, den ersten, oberen Abschnitt 46 und zweiten, unteren Abschnitt 47 einstückig miteinander verbunden auszubilden.

Das am zweiten, unteren Abschnitt 47 vorgesehene Außengewinde 48 greift in ein entsprechend ausgestaltetes Innengewinde 38 eines Schneckenrades 25, das insofern ein erstes Teilelement eines Hülsengewindetriebs 19 bildet, ein. Der mit Außengewinde 48 versehene zweite, untere Abschnitt 47 bildet dementsprechend ein zum ersten Teilelement des Hülsengewindetriebs 19 korrespondierendes zweites Teilelement. Das Schneckenrad 25 weist an seinem Außenumfang eine Schneckenverzahnung auf, die mit einer Schnecke 24 eines Schneckengetriebs 18 zusammenwirkt. Um das Schneckenrad 25 in axialer und radialer Richtung innerhalb des Innengehäuses 15 zu stabilisieren, weist das Schneckenrad 25 eine obere Lagerfläche 32 sowie eine untere Lagerfläche 33 auf, über die es sich über Kugeln 34 an entsprechenden Lagerflächen 49, 50 des Innengehäuses 15 abstützt.

Aus der Schnittansicht nach Figur 3 wird auch deutlich, dass das Innengehäuse 15 mehrteilig ausgebildet ist, nämlich in der vorliegenden Ausgestaltung konkret ein Gehäusegrundelement 35 sowie einen Gehäusedeckel 36 umfasst, wobei Gehäusegrundelement 35 und Gehäusedeckel 36 über Verbindungselemente 37, insbesondere Verbindungsschrauben, aneinander befestigt sind. Durch diesen Aufbau wird eine einfache Montierbarkeit der Spanneinheit gewährleistet. Es können nämlich im Montagevorgang die verschiedenen Einzelkomponenten, wie beispielsweise das mit dem Innenzylinder 11 versehene Schneckenrad 25, die Federn 13, 14, sowie die weiteren anhand von Figur 4 näher beschriebenen Komponenten in das Gehäusegrundelement 35 eingesetzt und mindestens teilweise bereits durch Fixierung des Gehäusedeckels 36 fixiert werden, wie beispielsweise zumindest die Federn 13, 14 und das Schneckenrad 25.

Unter Bezugnahme auf Figur 4 wird ersichtlich, dass im Innengehäuse 15 ein Elektromotor 16 angeordnet ist, der über eine Abtriebswelle 20 eine Drehbewegung auf ein Zahnradgetriebe 17 überträgt. Das Zahnradgetriebe 17 umfasst ein motorseitiges Zahnrad 22 sowie ein abtriebsseitiges Zahnrad 23, das drehmomentschlüssig mit der Schnecke 24 des Schneckengetriebes 18 verbunden ist. Die Schnecke 24 greift in das bereits erwähnte Schneckenrad 25 ein und versetzt dieses bei Betätigung des Elektromotors 16 in eine Drehbewegung. Die Schnecke 24 kann derart ausgebildet sein, dass sie selbsthemmend wirkt, d.h. auch bei einer vom Innenzylinder 11 auf den Hülsengewindetrieb 19 übertragenen Axialkraft eine Drehbewegung des Schneckenrads 25 verhindert wird. Alternativ oder zusätzlich kann aber auch eine Arretiereinrichtung 28 mit einer hier elektromagnetisch arbeitenden Betätigungseinrichtung 30 vorgesehen sein. In der Betätigungseinrichtung 30 ist ein axial verlagerbarer Stift 29 gelagert, der entlang seiner Längsachse von der in Figur 4 gezeigten Blockierstellung in eine zurückgezogene Position und vice versa überführbar ist. In der in Figur 4 gezeigten Blockierstellung greift der axial verlagerbare Stift 29 in eine Ausnehmung in einen Wellenfortsatz 31, der drehmomentschlüssig mit der Schnecke 24 verbunden ist, ein und blockiert somit die Getriebemittel 17 bis 19, insbesondere die Schnecke 24.

Weiterhin sind Arretiersensormittel 39 vorgesehen, über die feststellbar ist, ob sich der axial verlagerbare Stift 29 in Arretierposition oder in zurückgezogener Position befindet.

Nachfolgend soll nun noch ein Spannvorgang beschrieben werden, wobei unter einem Spannvorgang sowohl eine axiale Verstellung des Innenzylinders 11 in Stellrichtung A bzw. entgegen der Stellrichtung A als auch eine Verschiebung des Innengehäuses 15 unter Beaufschlagung der Federn 13, 14 zur Erzeugung einer im so definierten Federkraftspeicher 21 vorgehaltenen Federkraft verstanden werden soll: Wird der Elektromotor 16 in Drehbewegung versetzt, treibt die Abtriebswelle 20 über das Zahnradgetriebe 17 die Schnecke 24 des Schneckengetriebes 18 an, die ihre Drehbewegung auf das Schneckenrad 25 und damit auf den Hülsengewindetrieb 19 überträgt. Durch Drehung des ersten Teilelements des Hülsengewindetriebs 19 relativ zum zweiten Teilelement des Hülsengewindetriebs 19 wird der Innenzylinder 11 axial versetzt, beispielsweise in eine Richtung aus dem Außengehäuse 12 heraus. Trifft der Innenzylinder 11 auf eine Gegenkraft, beispielsweise wenn die Spanneinheit mit einem aufgesetzten Spannfutter zusammenwirkt und ein Werkstück bereits an Spannbacken des Spannfutters anliegt, bewirkt eine weitere Beaufschlagung des Innenzylinders 11, dass die Kraft, mit der das Werkstück eingespannt ist, erhöht wird. Dabei bewirkt nun eine weitere Kraftbeaufschlagung des Innenzylinders 11 nach außerhalb des Innengehäuses 15, dass das Innengehäuse 15 sich innerhalb des Außengehäuses 12 gegen die Wirkung der Federn 13, 14 in entgegengesetzter Richtung verlagert und so im Federkraftspeicher 21 eine Gegenkraft erzeugt wird. Über Sensoreinrichtungen 40 ist die Verschiebebewegung des Innengehäuses 15 relativ zum Außengehäuse 12 erfassbar und damit indirekt auch die im Federkraftspeicher 21 eingestellte Gegenkraft. Ist ein gewünschter Kraftwert erreicht, wird der Elektromotor 16 stillgesetzt und die Getriebemittel 17 bis 19 werden blockiert, entweder durch eine durch die Schnecke 24 vorgegebene Selbstarretierung und/oder durch die bereits erwähnten Arretiermittel 39.

Um die Drehbewegungen des Elektromotors 16, der Abtriebswelle 20 oder der Getriebemittel 17 bis 19 zu erfassen, können Sensoreinrichtungen 41 vorgesehen sein, die beispielsweise komplette Umdrehungszahlen über eine geeignete Sensorik, beispielsweise unter Ausnützung des Hall-Effekts, erfassen.

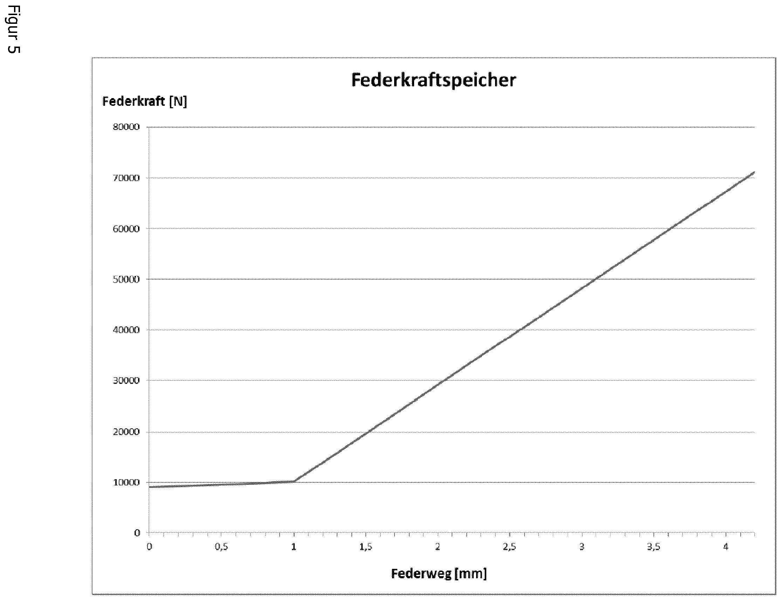

Unter Bezugnahme auf Figur 5 wird veranschaulicht, wie die verschiedenen Federn 13, 14 unterschiedlicher Bauart sich in ihren Federcharakteristika überlagern derart, dass schon bei geringem Verstellweg (Federweg) eine relativ große Gegenkraft (Federkraft) bereitgestellt wird, wobei dies bei geringen Verstellwegen (Federwegen) vorwiegend den Gasdruckfedern geschuldet ist. Bei größeren Verstellwegen (Federwegen) kommen dann die Spiralfedern ins Spiel, so dass sich ab einem gewissen Federweg eine deutlich ansteigende Federkraft ergibt. Es versteht sich von selbst, dass durch geeignete Kombination der Federcharakteristika von Gasdruckfedern und Spiralfedern sich eine gewünschte Federcharakteristik in weitem Maße einstellen lässt.

Die vorgeschlagene Spanneinheit ist äußerst kompakt aufgebaut und ermöglicht, Spannvorgänge schnell, zuverlässig und sicher durchzuführen.

### Bezuaszeichenliste

- 11: Innenzylinder
- 12: Außengehäuse
- 13: Feder, Spiralfeder
- 14: Feder, Gasdruckfeder
- 15: Innengehäuse
- 16: Elektromotor
- 17: Getriebemittel, Zahnradgetriebe
- 18: Getriebemittel, Schneckengetriebe
- 19: Getriebemittel, Hülsengewindetrieb
- 20: Abtriebswelle (Motor)
- 21: Federkraftspeicher
- 22: motorseitiges Zahnrad
- 23: abtriebsseitiges Zahnrad
- 24: Schnecke
- 25: Schneckenrad
- 28: Arretiereinrichtung
- 29: axial verlagerbarer Stift
- 30: Betätigungseinrichtung
- 31: Wellenfortsatz
- 32: obere Lagerfläche
- 33: untere Lagerfläche
- 34: Kugeln
- 35: Gehäusegrundelement
- 36: Gehäusedeckel
- 37: Verbindungselemente
- 38: Innengewinde
- 39: Arretiersensormittel
- 40: Sensoreinrichtungen (Federkraftspeicher)
- 41: Sensoreinrichtungen (Elektromotor, Getriebemittel)
- 42: Befestigungsflansch
- 43: Halsabschnitt
- 44: Öffnung (Außengehäuse)
- 45: Öffnung (Halsabschnitt des Innengehäuses)
- 46: erster, oberer Abschnitt
- 47: zweiter, unterer Abschnitt
- 48: Außengewinde
- 49, 50: Lagerflächen
- 51: unteres Außengehäuseelement
- 52: mittleres Außengehäuseelement
- 53: oberes Außengehäuseelement

## Patentansprüche

1. Spanneinheit, insbesondere zur Verwendung in einem Bearbeitungszentrum bzw. einem Dreh- bzw. Fräszentrum,
wobei die Spanneinheit ein Außengehäuse (12) von vorzugsweise zylindrischer Grundform, ein im Außengehäuse (12) aufgenommenes Innengehäuse (15) sowie einen im Innengehäuse (15) in einer im Betriebszustand vertikalen Stellrichtung A verstellbar gehaltenen Innenzylinder (11), der dazu ausgebildet ist, eine Druck- oder Zugkraft zu Spannzwecken zu übertragen, umfasst,
wobei sich das Innengehäuse (15) über Federn (13, 14) gegen das Außengehäuse (12) abstützt und in Stellrichtung A gegenüber dem Außengehäuse (12) verschieblich gelagert ist und so einen Federkraftspeicher (21) ausbildet,
und wobei innerhalb der Spanneinheit integriert, vorzugsweise vom Außengehäuse (12) umschlossen, ein Elektromotor (16) angeordnet ist, um über zwischengeordnete Getriebemittel (17 - 20) den Innenzylinder (11) mit einer Kraft in Stellrichtung A zu beaufschlagen,
**dadurch gekennzeichnet, dass**
der Elektromotor innerhalb des Innengehäuses (15) aufgenommen ist.

2. Spanneinheit nach Anspruch 1, **dadurch gekennzeichnet, dass** die Getriebemittel einen Hülsengewindetrieb (19) oder einen Planetenrollengewindetrieb umfassen, um eine Drehbewegung des Elektromotors (16) in eine axiale Beaufschlagung des Innenzylinders (11) zu übertragen.

3. Spanneinheit nach Anspruch 1 oder 2, **dadurch gekennzeichnet, dass** die Getriebemittel ein Schneckengetriebe (18) mit einer motorseits vorgesehenen Schnecke (24) und einem abtriebsseitig vorgesehenen Schneckenrad (25) umfassen.

4. Spanneinheit nach Anspruch 3, **dadurch gekennzeichnet, dass** das Schneckenrad (25) drehmomentschlüssig mit einem mit Innengewinde (38) versehenen ersten Teilelement des Hülsengewindetriebs (19) oder des Planetenrollengewindetriebs verbunden ist, insbesondere einstückig mit diesem ausgebildet ist.

5. Spanneinheit nach Anspruch 3 oder 4, **dadurch gekennzeichnet, dass** das Schneckenrad (25) eine umlaufende obere Lagerfläche (32) sowie eine umlaufende, untere Lagerfläche (33) umfasst, über die es sich, vorzugsweise über Kugeln (34) gegenüber dem Innengehäuse (15) in radialer und/oder axialer Richtung abstützt.

6. Spanneinheit nach einem der Ansprüche 1 bis 5, **dadurch gekennzeichnet, dass** der Elektromotor (16) eine Abtriebswelle (20) aufweist, die orthogonal zur Stellrichtung A angeordnet ist.

7. Spanneinheit nach einem der Ansprüche 3 bis 6, **dadurch gekennzeichnet, dass** die Schnecke (24) des Schneckengetriebes (18) mit einer zur Stellrichtung A orthogonal verlaufenden Achse S ausgerichtet ist.

8. Spanneinheit nach Anspruch 6 oder 7, **dadurch gekennzeichnet, dass** die Abtriebswelle (20) des Elektromotors (16) orthogonal zur Achse S der Schnecke (24) des Schneckengetriebes (18) ausgerichtet ist.

9. Spanneinheit nach einem der Ansprüche 1 bis 8, **dadurch gekennzeichnet, dass** sich das Innengehäuse (15) über eine Mehrzahl von Federn (13, 14) unterschiedlicher Bauart, insbesondere über ein oder mehrere Spiralfedern (13) und über ein oder mehrere Gasdruckfedern (14) am Außengehäuse (12) abstützt.

10. Spanneinheit nach einem der Ansprüche 1 bis 9, **dadurch gekennzeichnet, dass** das Innengehäuse (15) ein Gehäusegrundelement (35) sowie einen Gehäusedeckel (36) umfasst, die über lösbare Verbindungselemente (37) aneinander befestigt sind.

## Claims

1. Clamping unit, in particular for use in a machining center or a lathing or milling center,
wherein the clamping unit comprises an external housing (12) of a preferably cylindrical basic shape, an internal housing (15) accommodated in the external housing (12), and an internal cylinder (11) that is retained in the internal housing (15) to be adjustable in a vertical adjustment direction A when in the operating state, which internal cylinder is designed for transferring a compressive or tensile force for clamping purposes,
wherein the internal housing (15) is supported against the external housing (12) via springs (13, 14), and is mounted to be displaceable in the adjustment direction A with respect to the external housing (12) and thus forms a spring force storage unit (21),
and wherein an electric motor (16) is disposed inside the clamping unit, integrated therein, preferably encompassed by the external housing (12), in order to apply a force in the adjustment direction A to the internal cylinder (11) via intermediate gear means (17 - 20),
**characterized in that**
the electric motor is accommodated inside the internal housing (15).

2. Clamping unit according to claim 1, **characterized in that** the gear means comprise a sleeve screw drive (19) or a planetary roller screw drive in order to convert a rotational movement of the electric motor (16) in an axial application of the internal cylinder (11).

3. Clamping unit according to claim 1 or 2, **characterized in that** the gear means comprise a worm gear (18) having a worm (24) provided on the motor side and a worm wheel (25) provided on the output side.

4. Clamping unit according to claim 3, **characterized in that** the worm wheel (25) is coupled to a first partial element, provided with an internal thread, of the sleeve screw drive (19) or of the planetary roller screw drive in a torque-fit manner, in particular is formed in one piece therewith.

5. Clamping unit according to claim 3 or 4, **characterized in that** the worm wheel (25) comprises a circumferential upper bearing surface (32) and a circumferential lower bearing surface (33) via which it is supported, preferably via balls (34), in the radial and/or axial direction with respect to the internal housing (15).

6. Clamping unit according to anyone of claims 1 to 5, **characterized in that** the electric motor (16) has an output shaft (20) disposed to be orthogonal to the adjustment direction A.

7. Clamping unit according to anyone of claims 3 to 6, **characterized in that** the worm (24) of the worm gear (18) is aligned with an axis S extending orthogonally to the adjustment direction A.

8. Clamping unit according to claim 6 or 7, **characterized in that** the output shaft (20) of the electric motor (18) is orthogonally aligned to the axis S of the worm (24) of the worm gear (18).

9. Clamping unit according to anyone of claims 1 to 8, **characterized in that** the internal housing (15) is supported on the external housing (12) via a plurality of springs (13, 14) of different design, in particular via one or more spiral springs (13) and via one or more gas pressure springs (14).

10. Clamping unit according to anyone of claims 1 to 9, **characterized in that** the internal housing (15) comprises a basic housing element (35) and a housing cover (26) attached to each other via detachable connecting elements (37).

## Revendications

1. Unité de serrage, en particulier destinée à être utilisée dans un centre d'usinage ou un centre de tournage ou de fraisage,
sachant que l'unité de serrage comprend un carter extérieur (12) de forme de base de préférence cylindrique, un carter intérieur (15) logé dans le carter extérieur (12) ainsi qu'un cylindre intérieur (11) maintenu dans le carter intérieur (15) de façon réglable dans une direction de réglage verticale A en état de fonctionnement et constitué pour transmettre une force de pression ou de traction à des fins de serrage,
sachant que le carter intérieur (15) prend appui contre le carter extérieur (12) par le biais de ressorts (13, 14) et est logé de façon translatable en direction de réglage A par rapport au carter extérieur (12) et constitue ainsi un accumulateur de force de ressort (21),
et sachant qu'un moteur électrique (16) est disposé en étant intégré à l'intérieur de l'unité de serrage, de préférence entouré par le carter extérieur (12), pour soumettre le cylindre intérieur (11) à une force en direction de réglage A par le biais de moyens d'engrenage (17 à 20) intercalés,
**caractérisée en ce que**
le moteur électrique est logé à l'intérieur du carter intérieur (15).

2. Unité de serrage selon la revendication 1, **caractérisée en ce que** les moyens d'engrenage comprennent un actionneur à vis à douille (19) ou un actionneur à vis à rouleaux planétaires pour convertir un mouvement de rotation du moteur électrique (16) en un effort axial sur le cylindre intérieur (11).

3. Unité de serrage selon la revendication 1 ou 2, **caractérisée en ce que** les moyens d'engrenage comprennent un engrenage à vis sans fin (18) comportant une vis sans fin (24) prévue côté moteur et une roue tangente (25) prévue côté sortie.

4. Unité de serrage selon la revendication 3, **caractérisée en ce que** la roue tangente (25) est reliée de façon solidaire en couple de rotation à une première partie pourvue d'un filetage intérieur (38) de l'actionneur à vis à douille (19) ou de l'actionneur à vis à rouleaux planétaires, et est en particulier constituée d'une seule pièce avec celle-ci.

5. Unité de serrage selon la revendication 3 ou 4, **caractérisée en ce que** la roue tangente (25) comprend une face de palier (32) supérieure périphérique ainsi qu'une face de palier (33) inférieure périphérique via lesquelles elle prend appui en direction radiale et/ou axiale par rapport au carter intérieur (15), de préférence par le biais de billes (34).

6. Unité de serrage selon l'une des revendications 1 à 5, **caractérisée en ce que** le moteur électrique (16) présente un arbre de sortie (20) qui est disposé perpendiculairement à la direction de réglage A.

7. Unité de serrage selon l'une des revendications 3 à 6, **caractérisée en ce que** la vis sans fin (24) de l'engrenage à vis sans fin (18) est alignée avec un axe S perpendiculaire à la direction de réglage A.

8. Unité de serrage selon la revendication 6 ou 7, **caractérisée en ce que** l'arbre de sortie (20) du moteur électrique (16) est aligné perpendiculairement à l'axe S de la vis sans fin (24) de l'engrenage à vis sans fin (18).

9. Unité de serrage selon l'une des revendications 1 à 8, **caractérisée en ce que** le carter intérieur (15) prend appui sur le carter extérieur (12) par le biais d'une pluralité de ressorts (13, 14) de type de construction différent, en particulier par le biais d'un ou de plusieurs ressorts hélicoïdaux (13) et par le biais d'un ou de plusieurs ressorts pneumatiques (14).

10. Unité de serrage selon l'une des revendications 1 à 9, **caractérisée en ce que** le carter intérieur (15) comprend un élément de base de carter (35) ainsi qu'un couvercle de carter (36) qui sont fixés l'un à l'autre par le biais d'éléments de liaison (37) détachables.
